# EUROPÄISCHE PATENTSCHRIFT

(11) **EP 3 904 125 B1**
(45) Veröffentlichungstag und Bekanntmachung des Hinweises auf die Patenterteilung: **02.08.2023**
(21) Anmeldenummer: 20211508.5
(22) Anmeldetag: 03.12.2020
(51) Int. Cl.: B60C 19/00

(54) **FAHRZEUGREIFEN**
VEHICLE TYRE
PNEU DE VÉHICULE

(30) Priorität: 29.04.2020 DE 102020205408
(43) Veröffentlichungstag der Anmeldung: 03.11.2021
(73) Patentinhaber: Continental Reifen Deutschland GmbH, 30165 Hannover (DE)
(72) Erfinder: Kleffmann, Jens, 30419 Hannover (DE); Koch, Michael, 30419 Hannover (DE); Lehmann, Joerg, 30419 Hannover (DE)
(74) Vertreter: Continental Corporation

(56) Entgegenhaltungen:
- GB-A- 2 539 260
- GB-A- 2 577 285
- KR-A- 20070 022 930

## Beschreibung

Die Erfindung betrifft einen Fahrzeugreifen.

Es ist bekannt, dass Fahrzeugreifen eine Mindestleitfähigkeit aufweisen müssen. Diese Mindestleitfähigkeit soll sicherstellen, dass beim Betanken eines Fahrzeuges keine statische Aufladung des Fahrzeuges erfolgen kann. Damit soll die Gefahr einer explosiven Entladung ausgeschlossen werden.

Um die elektrische Leitfähigkeit von Fahrzeugreifen bereitzustellen, gibt es unterschiedliche Maßnahmen, die einen Einfluss auf den Rollwiderstand des Fahrzeugsreifens haben.

Die Maßnahmen zur Sicherstellung der erforderlichen elektrischen Leitfähigkeit haben im Allgemeinen zur Folge, dass sich der Rollwiderstand des Fahrzeugreifens erhöht.

Die GB 2 557 285 A, GB 2539 260 A und KR 2007 0022930 offenbaren bekannte Fahrzeugreifen.

Der Erfindung liegt die Aufgabe zugrunde, einen Fahrzeugreifen bereitzustellen, bei dem der Rollwiderstand verbessert wird und dem Fahrzeugreifen Informationen für den Einsatz an speziellen Fahrzeugen zugeordnet werden.

Gelöst wird die Aufgabe gemäß dem Oberbegriff und den kennzeichnenden Merkmalen von Anspruch 1 dadurch, dass
der Fahrzeugreifen einen Transponder aufweist,
wobei dem Transponder Informationen zur elektrischen Leitfähigkeit des Fahrzeugreifens und für die spezielle Verwendung der Fahrzeugreifen für einen speziellen Fahrzeugtyp zugeordnet sind.

Ein Vorteil der Erfindung ist insbesondere darin zu sehen, dass damit Fahrzeugreifen für spezielle Fahrzeuge bereitgestellt werden können, die einen geringen Rollwiderstand aufweisen als herkömmliche Fahrzeugreifen. Die neuen Fahrzeugreifen haben einen sehr hohen elektrischen Widerstand und sind damit praktisch nicht leitfähig ausgeführt.

Das kann bedeuten, dass der Reifen beispielsweise keinen oder in Bezug auf die verschiedenen Reifenbauteile nur einen sehr geringen Rußanteil aufweisen. Durch den geringen Rußanteil in der Gummimischung wird der Rollwiderstand des Fahrzeugreifens wesentlich verbessert.

Durch die Zuordnung von Informationen zur geringen Leitfähigkeit der Fahrzeugreifen wird sichergestellt, dass diese Fahrzeugreifen ausschließlich auf speziellen Fahrzeugen montiert werden.

Die Zuordnung der speziellen Informationen erfolgt mit einem Transponder, der an dem Fahrzeugreifen angeordnet ist. Diese Informationen können automatisiert durch ein Lesegerät am Fahrzeug oder in einer Werkstatt ausgelesen werden.

Bei den speziellen Fahrzeugen kann es sich beispielsweise um ein Fahrzeug mit einem Elektroantrieb handeln.

Beim Aufladen der Batterie für den Elektroantrieb ist immer sichergestellt, dass eine elektrische Erdung vorhanden ist. Daher kann es beim Aufladen der Batterie nicht zu einer statischen Entladung des Fahrzeuges kommen. Außerdem wird das Fahrzeug nicht mit Treibstoff betankt, welches sich bei einer statischen Entladung entzünden kann.

Die speziellen Fahrzeuge mit einem Elektroantrieb können dadurch mit Fahrzeugreifen bestückt werden, die einen besonders geringen Rollwiderstand aufweisen.

In einer vorteilhaften Weiterbildung der Erfindung ist vorgesehen, dass der Transponder fest im Reifenwulst oder in der Seitenwand integriert ist.

An diesen Positionen im Fahrzeugreifen lässt sich der Transponder optimal mit einem Lesegerät auslesen.

In einer weiteren vorteilhaften Weiterbildung der Erfindung ist vorgesehen, dass die Informationen auf den Transponder angeben, dass der Fahrzeugreifen aufgrund des hohen Widerstandes nicht leitend ist und nur für spezielle Fahrzeugtypen zugelassen ist.

Dadurch kann sichergestellt werden, dass die Fahrzeugreifen nicht versehentlich an Fahrzeugen mit einem Verbrennungsmotor montiert werden.

In einer weiteren vorteilhaften Weiterbildung der Erfindung ist vorgesehen, dass die Informationen zum Fahrzeugreifen und die Verwendung der Fahrzeugreifen für einen speziellen Fahrzeugtyp auf einem Speicher des Transponders enthalten sind.

Dadurch können diese wesentlichen Informationen einfach und schnell dem Lesegerät zur Verfügung gestellt werden.

In einer weiteren vorteilhaften Weiterbildung der Erfindung ist vorgesehen, dass die Informationen zum Fahrzeugreifen und die Verwendung der Fahrzeugreifen für einen speziellen Fahrzeugtyp in externen Datenbank vom Reifenhersteller enthalten sind, wobei die Informationen über eine Datenverbindung zwischen dem Transponder und der Datenbank abgerufen werden.

Bei dieser Variante werden Daten zur geringen Leitfähigkeit des Fahrzeugreifens in einer externen Datenbank beim Reifenhersteller bereitgestellt. Über eine Datenverbindung zwischen dem Transponder und der externen Datenbank wird ermittelt, dass der betreffende Fahrzeugreifen die entsprechende elektrische Leitfähigkeit aufweist.

Dadurch können die entsprechenden Informationen unmittelbar einem Flottenbetreiber zur Verfügung gestellt werden.

In einer weiteren vorteilhaften Weiterbildung der Erfindung ist vorgesehen, dass die Informationen zum Fahrzeugreifen und die Verwendung der Fahrzeugreifen für einen speziellen Fahrzeugtyp automatisiert zum Fahrzeug übertragen werden,
wobei bei einer fehlerhaften Montage des Fahrzeugreifens an einem nicht zugelassenen Fahrzeug eine automatisierte Fehlermeldung erfolgt.

Dadurch wird eine Fehlmontage an einem nicht zugelassenen Fahrzeug nahezu ausgeschlossen.

Bei einer weiteren Ausführung würde bei einer Fehlmontage eines entsprechenden Fahrzeugreifens die Zündung des Fahrzeuges automatisch ausgeschaltet werden.

In einer vorteilhaften Weiterbildung der Erfindung ist vorgesehen, dass der Fahrzeugreifen einen elektrischen Widerstand von größer als 10⁷ Ohm, vorzugsweise größer als 10⁸ Ohm, 10¹⁰ Ohm oder 10¹² Ohm, aufweist. Wenn die Notwendigkeit einer elektrischen Leitfähigkeit eines Reifens nicht gegeben ist, können Reifen hinsichtlich Rollwiderstand besser optimiert werden.

Die einzelnen Reifenbauteile des Fahrzeugreifens können beispielsweise mit weniger oder gar keinem Rußmaterial versehen werden.

In einer weiteren vorteilhaften Weiterbildung der Erfindung ist vorgesehen, dass der Fahrzeugreifen ausschließlich für spezielle Fahrzeuge mit einem Elektromotorantrieb oder einen Wasserstoffantrieb zugelassen ist.

Insbesondere bei Elektrofahrzeugen ist es wichtig, dass diese mit Fahrzeugreifen bestückt werden, die einen geringen Rollwiderstand aufweisen.

In einer weiteren vorteilhaften Weiterbildung der Erfindung ist vorgesehen, dass der Fahrzeugreifen ausschließlich für spezielle Fahrzeuge mit einer zusätzlichen elektrischen Schutzerdung zugelassen ist.

Über die zusätzliche elektrische Schutzerdung wird sichergestellt, dass das Fahrzeug sich nicht statisch aufladen kann.

Die zusätzliche Schutzerdung kann beispielsweise in Form eines freien und leitenden Kabels ausgeführt sein, welches auf der Unterseite des Fahrzeuges befestigt ist und lose am Boden aufliegt.

In einer weiteren vorteilhaften Weiterbildung der Erfindung ist vorgesehen, dass nur spezielle Reifenbauteile einen elektrischen Widerstand von größer als 10⁷ Ohm, vorzugsweise als 10⁸ Ohm, 10¹⁰ Ohm oder 10¹² Ohm, aufweisen.

Bestimmte Reifenbauteile haben einen sehr hohen Einfluss auf den Rollwiderstand des Fahrzeugreifens. Im Allgemeinen ist es ausreichend, nur diese Reifenbauteile im Hinblick auf die elektrische Leitfähigkeit zu beeinflussen.

In einer weiteren vorteilhaften Weiterbildung der Erfindung ist vorgesehen, dass die speziellen Reifenbauteile zumindestens den Laufstreifen, die Seitenwand und/oder die Gürtelgummierung umfassen.

Diese Reifenbauteile haben im Allgemeinen den größten Einfluss auf den Rollwiderstand des Fahrzeugreifens.

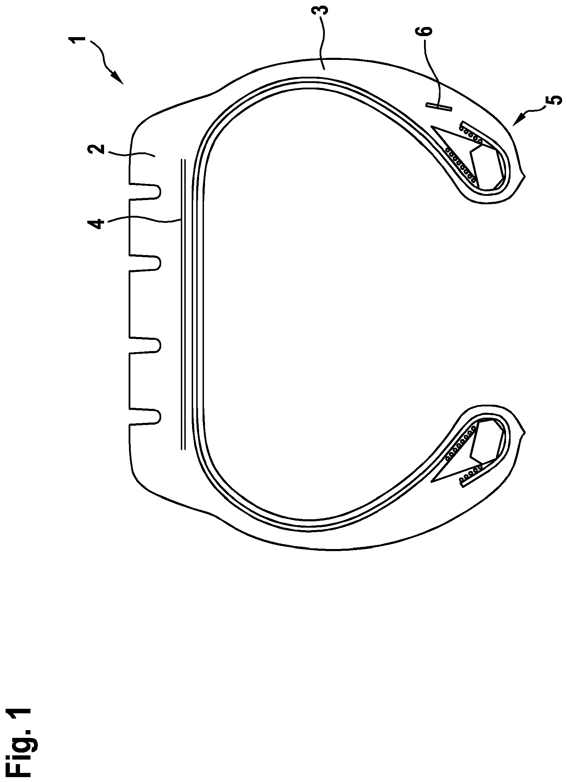

Anhand von Ausführungsbeispielen soll die Erfindung näher erläutert werden. Es zeigt: Fig. 1: einen Reifenabschnitt

Die Figur 1 zeigt einen Reifenabschnitt eines Fahrzeugreifens 1 in einer Radialschnittansicht. Der Fahrzeugreifen 1 umfasst eine Vielzahl von Reifenbauteilen, wie den Laufstreifen 2, die Seitenwände 3, den Reifengürtel 4 und den Reifenwulst 5.

Der Fahrzeugreifen 1 hat einen insgesamt sehr hohen elektrischen Widerstand von größer als 10⁶ Ohm. Diese elektrische Leitfähigkeit wird unter anderem dadurch erreicht, dass auf bestimmte Füllstoffe bei den Gummimischungen für die Reifenbauteile verzichtet wird.

Bei diesen Füllstoffen handelt es sich im Wesentlichen um Rußpartikel, die im Normalfall die elektrische Leitfähigkeit für eine Gummimischung herstellen.

Bei den speziellen Fahrzeugen handelt es sich beispielsweise um Fahrzeuge mit einem Elektroantrieb.

Außerdem weist der Fahrzeugreifen 1 einen Transponder 6 im Bereich des Reifenwulstes auf. Auf dem Speicher des Transponder 6 sind eine Vielzahl von Informationen zum Fahrzeugreifen abgespeichert. Zu diesen Informationen zählen ebenfalls die elektrische Leitfähigkeit, die bei diesen speziellen Fahrzeugreifen besonders niedrig ausgebildet sind.

Auf dem Transponder 6 sind alle Informationen zu dem Fahrzeugreifen 1 abgespeichert. Zu diesen Informationen zählt ebenfalls, dass der Fahrzeugreifen 1 nicht leitfähig ist und ausschließlich für spezielle Fahrzeuge zugelassen ist.

Bei dem Transponder handelt es sich vorzugsweise um einen RFID-Chip.

Der Transponder 6 kann automatisiert mit einem externen Lesegerät ausgelesen werden.

Das externe Lesegerät ist beispielsweise im Radkasten des Fahrzeuges verbaut und mit dem Bordcomputer des Fahrzeuges verbunden. Für den Fall, dass der Fahrzeugreifen versehentlich an einem Fahrzeug mit einem Verbrennungsmotor montiert worden ist, würde eine entsprechende Warnmeldung ausgegeben werden.

Die Warnmeldung könnte damit verbunden sein, dass die Zündung des Fahrzeuges deaktiviert wird.

Bestimmte Reifenbauteile haben einen sehr hohen Einfluss auf den Rollwiderstand des Fahrzeugreifens. Im Allgemeinen ist es ausreichend, nur diese Reifenbauteile im Hinblick auf die elektrische Leitfähigkeit zu beeinflussen.

Die Messmethode zur Bestimmung der elektrischen Leitfähigkeit eines Reifens ist insb. in der Norm ISO 16392 beschrieben.

### Bezugszeichenliste (ist Teil der Beschreibung)

- 1: Fahrzeugreifen
- 2: Laufstreifen
- 3: Seitenwand
- 4: Reifengürtel
- 5: Reifenwulst
- 6: Transponder bzw. RFID-Chip

## Patentansprüche

1. Fahrzeugreifen mit einem Laufstreifen (2) , zwei Seitenwänden (3), einer Reifeninnenseite, einem Reifenhohlraum, mindestens einer Karkasslage und einer Gürtellage (4),
wobei die Reifenbauteile unterschiedliche Gummimischungen und Festigkeitsträger aufweisen, wobei der Fahrzeugreifen einen Transponder (6) aufweist,
**dadurch gekennzeichnet, dass**
dem Transponder (6) Informationen zur elektrischen Leitfähigkeit des Fahrzeugreifens und für die spezielle Verwendung des Fahrzeugreifens für einen speziellen Fahrzeugtyp zugeordnet sind.

2. Fahrzeugreifen nach Anspruch 1,
**dadurch gekennzeichnet, dass**
der Transponder (6) fest im Reifenwulst (5) oder in der Seitenwand (3) integriert ist.

3. Fahrzeugreifen nach einem der vorhergehenden Ansprüche,
**dadurch gekennzeichnet, dass**
die Informationen auf den Transponder (6) angeben, dass der Fahrzeugreifen aufgrund des hohen Widerstandes nicht leitend ist und nur für spezielle Fahrzeugtypen zugelassen ist.

4. Fahrzeugreifen nach einem der vorhergehenden Ansprüche,
**dadurch gekennzeichnet, dass**
die Informationen zum Fahrzeugreifen und die Verwendung der Fahrzeugreifen für einen speziellen Fahrzeugtyp auf einem Speicher des Transponders (6) enthalten sind.

5. Fahrzeugreifen nach einem der vorhergehenden Ansprüche,
**dadurch gekennzeichnet, dass**
die Informationen zum Fahrzeugreifen und die Verwendung der Fahrzeugreifen für einen speziellen Fahrzeugtyp in externen Datenbank vom Reifenhersteller enthalten sind.

6. Fahrzeugreifen nach einem der vorhergehenden Ansprüche,
**dadurch gekennzeichnet, dass**
die elektrische Leitfähigkeit des Fahrzeugreifens den elektrischen Widerstand des Fahrzeugreifens betrifft, wobei der Widerstand des Fahrzeugreifens größer als 10⁶ Ohm ist, vorzugsweise größer als 10⁷ Ohm, 10⁸ Ohm, 10⁹ Ohm oder 10¹⁰ Ohm.

7. Fahrzeugreifen nach einem der vorhergehenden Ansprüche,
**dadurch gekennzeichnet, dass**
der Fahrzeugreifen ausschließlich für spezielle Fahrzeugtypen mit einem Elektromotorantrieb oder einen Wasserstoffantrieb zugelassen ist.

8. Fahrzeugreifen nach einem der vorhergehenden Ansprüche,
**dadurch gekennzeichnet, dass**
der Fahrzeugreifen ausschließlich für spezielle Fahrzeugtypen mit einer zusätzlichen elektrischen Schutzerdung zugelassen ist.

9. Fahrzeugreifen nach einem der vorhergehenden Ansprüche,
**dadurch gekennzeichnet, dass**
nur spezielle Reifenbauteile einen elektrischen Widerstand von größer als 10⁷ Ohm, vorzugsweise größer als 10⁸ Ohm oder 10¹² Ohm, aufweisen.

10. Fahrzeugreifen nach Anspruch 9,
**dadurch gekennzeichnet, dass**
die speziellen Reifenbauteile zumindestens den Laufstreifen (2), die Seitenwand (3) und/oder die Gürtelgummierung umfassen.

## Claims

1. Vehicle tyre having a tread (2), two sidewalls (3), a tyre inside, a tyre cavity, at least one carcass ply and a belt ply (4),
wherein the tyre components have different rubber compounds and reinforcements, wherein
the vehicle tyre comprises a transponder (6),
**characterized in that**
the transponder (6) has associated information about the electrical conductivity of the vehicle tyre and for the specific use of the vehicle tyre for a specific vehicle type.

2. Vehicle tyre according to Claim 1,
**characterized in that**
the transponder (6) is integrated permanently in the tyre bead (5) or in the sidewall (3).

3. Vehicle tyre according to either of the preceding claims,
**characterized in that**
the information relating to the transponder (6) indicates that the vehicle tyre is nonconductive on account of the high resistance and is permitted only for specific vehicle types.

4. Vehicle tyre according to one of the preceding claims,
**characterized in that**
the information about the vehicle tyre and the use of the vehicle tyres for a specific vehicle type is held in a memory of the transponder (6).

5. Vehicle tyre according to one of the preceding claims,
**characterized in that**
the information about the vehicle tyre and the use of the vehicle tyres for a specific vehicle type is held in an external database of the tyre manufacturer.

6. Vehicle tyre according to one of the preceding claims,
**characterized in that**
the electrical conductivity of the vehicle tyre relates to the electrical resistance of the vehicle tyre, the resistance of the vehicle tyre being greater than 10⁶ ohms, preferably greater than 10⁷ ohms, 10⁸ ohms, 10⁹ ohms or 10¹⁰ ohms.

7. Vehicle tyre according to one of the preceding claims,
**characterized in that**
the vehicle tyre is permitted exclusively for specific vehicle types having an electric motor drive or a hydrogen drive.

8. Vehicle tyre according to one of the preceding claims,
**characterized in that**
the vehicle tyre is permitted exclusively for specific vehicle types having an additional electrical protective earthing.

9. Vehicle tyre according to one of the preceding claims,
**characterized in that**
only specific tyre components have an electrical resistance of greater than 10⁷ ohms, preferably greater than 10⁸ ohms or 10¹² ohms.

10. Vehicle tyre according to Claim 9,
**characterized in that**
the specific tyre components comprise at least the tread (2), the sidewall (3) and/or the belt rubber mix.

## Revendications

1. Pneumatique de véhicule avec une bande de roulement (2), deux parois latérales (3), un côté intérieur de pneumatique, une cavité de pneumatique, au moins une couche de carcasse et une couche de ceinture (4), les composants du pneumatique présentant des mélanges de caoutchouc et des supports de résistance différents,
le pneumatique de véhicule présentant un transpondeur (6),
**caractérisé en ce que**
des informations sur la conductivité électrique du pneumatique de véhicule et pour l'utilisation spéciale du pneumatique de véhicule pour un type de véhicule spécial sont associées au transpondeur (6).

2. Pneumatique de véhicule selon la revendication 1, **caractérisé en ce que** le transpondeur (6) est intégré de manière fixe dans le talon (5) ou dans la paroi latérale (3).

3. Pneumatique de véhicule selon l'une quelconque des revendications précédentes, **caractérisé en ce que** les informations sur le transpondeur (6) indiquent que le pneumatique de véhicule n'est pas conducteur en raison de la résistance élevé et n'est autorisé que pour des types de véhicules spéciaux.

4. Pneumatique de véhicule selon l'une quelconque des revendications précédentes, **caractérisé en ce que** les informations sur le pneumatique de véhicule et l'utilisation du pneumatique de véhicule pour un type de véhicule spécial sont contenues dans une mémoire du transpondeur (6).

5. Pneumatique de véhicule selon l'une quelconque des revendications précédentes, **caractérisé en ce que** les informations sur le pneumatique de véhicule et l'utilisation du pneumatique de véhicule pour un type de véhicule spécial sont contenues dans une base de données externe du fabricant de pneumatiques.

6. Pneumatique de véhicule selon l'une quelconque des revendications précédentes, **caractérisé en ce que** la conductivité électrique du pneumatique de véhicule concerne la résistance électrique du pneumatique de véhicule, la résistance du pneumatique de véhicule étant supérieure à 10⁶ ohms, de préférence supérieure à 10⁷ ohms, 10⁸ ohms, 10⁹ ohms ou 10¹⁰ ohms.

7. Pneumatique de véhicule selon l'une quelconque des revendications précédentes, **caractérisé en ce que** le pneumatique de véhicule est autorisé exclusivement pour des types de véhicules spéciaux à moteur électrique ou à hydrogène.

8. Pneumatique de véhicule selon l'une quelconque des revendications précédentes, **caractérisé en ce que** le pneumatique de véhicule est autorisé exclusivement pour des types de véhicules spéciaux avec une mise à la terre de protection électrique supplémentaire.

9. Pneumatique de véhicule selon l'une quelconque des revendications précédentes, **caractérisé en ce que** seuls des composants spéciaux du pneumatique présentent une résistance électrique supérieure à 10⁷ ohms, de préférence supérieure à10⁸ ohms ou 10¹² ohms.

10. Pneumatique de véhicule selon la revendication 9, **caractérisé en ce que** les composants spéciaux du pneumatique comprennent au moins la bande de roulement (2), la paroi latérale (3) et/ou le caoutchouc de la ceinture.
